# EUROPEAN PATENT APPLICATION

(11) **EP 4 836 163 A1**
(43) Date of publication of application: **04.11.2026**
(21) Application number: 24910090.0
(22) Date of filing: 29.09.2024
(51) Int. Cl.: H01M 50/46, H01M 50/449, H01M 50/434, H01M 50/489, H01M 10/0525

(54) **BATTERY SEPARATOR, BATTERY AND ELECTRICAL DEVICE**

(30) Priority: 28.12.2023 CN 202311836352
(71) Applicant: BYD Company Limited, Shenzhen, Guangdong 518118 (CN)
(72) Inventor: SONG, Zhenglin, Shenzhen, Guangdong 518118 (CN); PAN, Zeng, Shenzhen, Guangdong 518118 (CN); ZHANG, Meng, Shenzhen, Guangdong 518118 (CN)
(74) Representative: Mathys & Squire
(86) International application number: PCT/CN2024/122139
(87) International publication number: WO 2025/139147

(57) **Abstract**

A battery separator, a battery and an electrical device. The separator includes a substrate layer and bonding particles dispersed within the substrate layer, the bonding particles being exposed from the outer surface of at least one side of the substrate layer in the thickness direction. The bonding particles are distributed within the substrate layer of the separator, and, when the separator is applied to a battery, the portions of the bonding particles exposed from the substrate layer can bond the separator to an electrode sheet; and the substrate layer can be prepared simply by means of single-pass coating, thus reducing process steps and reducing the separator production cost. In addition, the separator having the described structure can reduce the risk of bubble generation at the interface between the separator and an electrode sheet during a battery formation process, so as to improve the structural stability of battery cells, thus helping to ensure better performance of batteries.

## Description

### CROSS-REFERENCE TO RELATED APPLICATIONS

The present disclosure claims priority to Chinese Patent disclosure No. 202311836352.6 filed on December 28, 2023, entitled "BATTERY SEPARATOR, BATTERY AND ELECTRICAL DEVICE", the entire contents of which are incorporated herein by reference.

### FIELD

The present disclosure relates to the field of batteries, and in particular, to a battery separator, a battery and an electrical device.

### BACKGROUND

In secondary batteries, to prevent direct contact between a positive electrode sheet and a negative electrode sheet, a separator is generally arranged between the positive electrode sheet and the negative electrode sheet. In related technologies, the separator is prone to swelling and wrinkling, and an interface between the separator and an electrode surface is unstable and prone to delamination, resulting in poor battery manufacturing processes. Gases generated during battery formation are also prone to accumulate at the separator interface, forming bubbles, which deteriorates the battery interface.

To address the above problems, the industry commonly uses a separator having a laminated dual-coating structure, comprising a substrate, a ceramic coating, and an organic coating arranged in layers. The ceramic coating is used to improve the performance of the separator, and the organic coating is used to achieve soft contact and adhesion between the separator and the electrode sheet surface, facilitating electrode assembly shaping while alleviating separator wrinkles and optimizing the battery interface. However, the separator suffers from unstable adhesion and a tendency to delaminate, resulting in poor battery manufacturing processes. Moreover, the dual-coating structure requires two separate coating processes: specifically, first coating the ceramic coating on the substrate, and then coating the organic layer on the ceramic coating. The preparation process is complicated, costly, and has low production efficiency, and the resulting separator has a relatively large thickness.

### SUMMARY

In view of this, the present disclosure provides a battery separator, a battery, and an electrical device. Bonding particles are distributed within the substrate layer of the separator. When the separator is applied to a battery, portions of the bonding particles exposed from the substrate layer can bond the separator to an electrode sheet, providing stable adhesion to the surface of the electrode sheet. Moreover, the substrate layer can be prepared simply by means of a single-pass coating, thus reducing process steps and reducing the separator production cost. In addition, the separator can reduce the risk of bubble generation at the interface between the separator and an electrode sheet during a battery formation process, so as to improve the structural stability of battery cells, thus helping to ensure better performance of batteries.

In a first aspect, the present disclosure provides a battery separator, including a substrate layer and bonding particles dispersed in the substrate layer, the bonding particles being exposed from an outer surface of at least one side of the substrate layer in a thickness direction thereof.

The bonding particles are exposed from an outer surface of at least one side of the substrate layer in the thickness direction. When the separator is applied to a battery, good contact between the bonding particles and the electrode sheet can be achieved. The bonding particles can fully perform their adhesive function, bonding the separator to the electrode sheet and improving the structural stability of the battery cell. In addition, the exposure of the bonding particles from the substrate layer can leave gaps between the electrode sheet and the substrate layer, providing gas venting channels for gases generated during battery formation, reducing the risk of interface deterioration caused by blistering, which could lead to lithium precipitation (for lithium-ion batteries) or sodium precipitation (for sodium-ion batteries). More importantly, the substrate layer can be obtained directly by a single coating process, saving process steps, greatly improving production efficiency, and reducing production costs.

In a second aspect, the present disclosure provides a battery, including a positive electrode sheet, a negative electrode sheet, and the separator according to the first aspect of the present disclosure; wherein the separator is disposed between the positive electrode sheet and the negative electrode sheet.

The separator has good thermal stability and mechanical stability, and good adhesion to the positive electrode sheet and the negative electrode sheet. Therefore, the separator is not prone to misalignment during battery manufacturing, storage, and cycling. It can also provide good gas venting channels for gases generated during battery formation, improving issues such as delamination between the separator and the electrode sheet. The battery has good internal structural stability, which is beneficial for long-term stable performance of the battery. In addition, using the battery separator can reduce the production cost of the battery.

In a third aspect, the present disclosure provides an electrical device, including the battery according to the second aspect of the present disclosure. By using the battery provided by the present disclosure for power supply, the electrical device has stable power supply and high market competitiveness.

### BRIEF DESCRIPTION OF THE DRAWINGS

FIG. 1A is a schematic structural diagram of one structure of a battery separator according to an embodiment of the present disclosure.
FIG. 1B is a schematic structural diagram of one structure of a battery separator according to another embodiment of the present disclosure.
FIG. 2A and FIG. 2B are scanning electron microscope (SEM) photographs of a battery separator according to Example 1 of the present disclosure at different angles, and FIG. 2C is an SEM photograph of the battery separator of Example 1 after hot-pressing.
FIG. 3A and FIG. 3B are SEM photographs of a battery separator according to Example 4 of the present disclosure at different angles, and FIG. 3C is an SEM photograph of the battery separator of Example 4 after hot-pressing.
FIG. 4A and FIG. 4B are SEM photographs of a battery separator according to Example 14 of the present disclosure at different angles, and FIG. 4C is an SEM photograph of the battery separator of Example 14 after hot-pressing.
FIG. 5 is an SEM photograph of the surface of a battery electrode sheet disassembled from the battery of Example 4 after room temperature cycle testing.
FIG. 6 is a schematic structural diagram of a battery according to an embodiment of the present disclosure.
FIG. 7 is a schematic structural diagram of an electrical device according to an embodiment of the present disclosure.

Explanation of reference numerals: 100-separator; 1-substrate layer; 10-substrate; 20-composite coating layer; 21-ceramic substrate layer; 2-bonding particle; 60-battery; 61-positive electrode sheet; 63-negative electrode sheet; 70-electrical device.

### DETAILED DESCRIPTION

Currently, to improve the thermal stability, mechanical properties, and electrolyte wettability of polyolefin films for use as battery separator, it is common in the industry to provide a ceramic coating on the surface of the polyolefin film. However, existing ceramic coatings do not adhere to electrode sheets and cannot form structurally stable battery cells. Therefore, an additional organic material layer (typically a polyvinylidene fluoride layer, PVDF) is usually required on the surface of the ceramic coating to act as a "bridge" between the separator and the electrode sheet. Although there are also prior art methods that add binder particles to the ceramic coating itself, these binder particles are only used to bind the ceramic particles and improve the strength of the ceramic coating itself, and an additional organic material layer is still required. Obviously, the two coatings require two separate coating processes, which involve many process steps, greatly increase production costs in industrial manufacturing, and reduce production efficiency. Moreover, the organic material layer generally requires a spin-coating process, resulting in poor uniformity of the organic material layer, poor adhesion between the separator and the electrode sheet during the hot-pressing process of battery cell manufacturing, and the resulting battery cell is prone to issues such as delamination. To address the above problems, an embodiment of the present disclosure provides a battery separator, comprising a substrate and a composite coating layer disposed on an outer surface of at least one side of the substrate. The composite coating layer comprises a ceramic substrate layer and a plurality of bonding particles dispersed in the ceramic substrate layer, wherein a particle size of an individual bonding particle is greater than a thickness of the ceramic substrate layer.

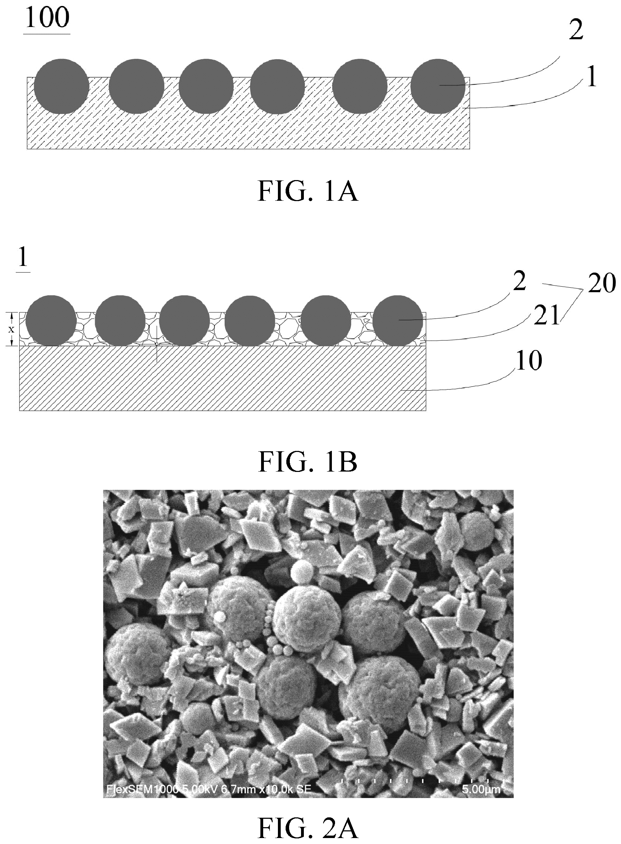

Referring to FIG. 1A, an embodiment of the present disclosure provides a battery separator 100, comprising a substrate layer 1 and bonding particles 2 dispersed in the substrate layer 1, the bonding particles 2 being exposed from an outer surface of at least one side of the substrate layer 1 in a thickness direction.

In the embodiment of the present disclosure, the bonding particles are further referred to as organic bonding particles. In the separator, the bonding particles for bonding the electrode sheet and the separator are directly dispersed in the substrate layer. The bonding particles have exposed portions relative to an outer surface of at least one side of the substrate layer in the thickness direction, thereby enabling good contact between the bonding particles and the electrode sheet when the separator is applied to a battery. During the hot-pressing process of battery cell manufacturing, the bonding particles are soft, neither damaging the electrode sheet nor failing to fully perform their adhesive function. They enhance the bonding force between the separator and the electrode sheet, improve the structural stability of the battery cell, prevent misalignment due to sliding caused by external forces (e.g., vibration) during battery transportation and assembly, and also mitigate the issue of separator substrate shrinkage after electrolyte introduction. More importantly, the bonding particles protrude from the substrate layer, and even after hot-pressing, they can leave gaps between the electrode sheet and the ceramic substrate layer, providing gas venting channels for gases generated during battery formation (specifically, rapid gas venting channels between the separator and the electrode sheet, wherein gases can be quickly expelled through the gaps formed between the exposed portions of a plurality of bonding particles), thereby avoiding interface deterioration caused by blistering, which could lead to lithium precipitation (for lithium-ion batteries) or sodium precipitation (for sodium-ion batteries). More importantly, the substrate layer can be obtained directly by a single coating process, saving process steps, greatly improving production efficiency, and reducing production costs. In the present disclosure, the separator may have the substrate layer on one side surface, or on both opposite side surfaces in the thickness direction.

In the present disclosure, the bonding particles may be spherical or spheroidal. When the bonding particles are spherical, the particle size refers to the diameter of the bonding particle; when the bonding particles are spheroidal, the particle size refers to the dimension of the bonding particle perpendicular to the thickness direction of the separator (i.e., perpendicular to the lamination direction of the substrate and the composite coating layer). In some embodiments of the present disclosure, the sphericity (Ψ) of the bonding particles is in the range of 0.75 to 1.

In some embodiments of the present disclosure, referring to FIG. 1B, the substrate layer 1 comprises a substrate 10 and a composite coating layer 20 disposed on a surface of at least one surface of the substrate 10 in a thickness direction. The composite coating layer 20 comprises a ceramic substrate layer 21 and a plurality of bonding particles 2 dispersed in the ceramic substrate layer 21, the bonding particles 2 being exposed from an outer surface of the ceramic substrate layer 21. In this way, the bonding particles have a certain depth (the lower portion of the bonding particle) surrounded by the ceramic material in the direction from the substrate side towards the composite coating layer, so the adhesion between the bonding particles and the substrate as well as the ceramic substrate layer is good. Meanwhile, the other parts (the top portion) of the bonding particles are exposed relative to the ceramic substrate layer. Compared with the prior art (where the average thickness of the organic material bonding layer is generally 3 µm), the thickness of the composite coating layer of the present disclosure can be relatively small while achieving the same effect, thereby facilitating an increase in the volumetric energy density of the battery.

In some embodiments of the present disclosure, the ceramic substrate layer comprises ceramic particles. The ceramic substrate layer is mainly composed of ceramic particles, and gaps exist between the particles. Therefore, the ceramic substrate layer also contains many gas channels, which can provide more gas venting channels for gases generated during battery formation, thereby further avoiding interface deterioration due to blistering between the separator substrate and the ceramic substrate layer, and between the separator and the electrode sheet, which is beneficial for battery performance.

In some embodiments of the present disclosure, the particle size D50 of the ceramic particles is in the range of 0.1 µm to 1.5 µm. For example, the particle size of the ceramic particles can be 0.1 µm, 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, etc. Controlling the particle size of the ceramic particles within the above range allows the porosity of the ceramic substrate layer to be controlled within a suitable range, thereby enabling timely discharge of gases generated during battery formation from the composite coating layer. In the embodiments of the present disclosure, the particle size D50 of the ceramic particles refers to the particle size corresponding to a cumulative volume percentage of 50%, and can be measured using a laser particle size analyzer. Specifically, the material of the ceramic substrate layer is sampled and pretreated to remove possible binders and other substances, and then the particle size D50 is measured using a laser particle size analyzer.

In some embodiments of the present disclosure, the material of the ceramic particles includes, but is not limited to, at least one of alumina, boehmite, silica, silicon carbide, and silicon nitride.

In some embodiments of the present disclosure, the thickness of the ceramic substrate layer is x µm, and the particle size D50 of the bonding particles is in the range of (x + 0.4 µm) to (x + 2.0 µm). For example, the particle size D50 of the bonding particles can be x+0.4 µm, x+0.5 µm, x+0.6 µm, x+0.7 µm, x+0.8 µm, x+0.9 µm, x+1.0 µm, x+1.1 µm, x+1.2 µm, x+1.3 µm, x+1.4 µm, x+1.5 µm, x+1.6 µm, x+1.7 µm, x+1.8 µm, x+1.9 µm, etc. It is understandable that, considering that in some cases there may be ceramic particles between the bonding particles and the substrate, when the particle size of the bonding particles is x+a µm, the thickness by which they protrude relative to the ceramic substrate layer is greater than or equal to a µm. In addition, the bonding particles are solid structures, making it difficult for active ions to pass through. Excessively large particles can lead to increased local impedance, affecting the consistency of battery polarization. Therefore, controlling the particle size of the bonding particles within the above range allows the separator to balance adhesion to the electrode sheet and ionic conductivity, resulting in high structural stability inside the battery cell and good battery consistency, enabling good rate capability and cycle performance.

In some specific embodiments of the present disclosure, the thickness of the ceramic substrate layer is x µm, and the particle size D50 of the bonding particles is in the range of (x + 0.8 µm) to (x + 1.5 µm). For example, the particle size D50 of the bonding particles can be x+0.8 µm, x+0.9 µm, x+1.0 µm, x+1.1 µm, x+1.2 µm, x+1.3 µm, x+1.4 µm, x+1.5 µm, etc. Further controlling the particle size D50 of the bonding particles within the above range generally allows the protrusion height of the bonding particles relative to the ceramic substrate layer to be controlled within 0.8 µm to 1.5 µm. This height is beneficial for adhesion between the separator and the electrode sheet, further enhancing the interfacial bonding force between the separator and the electrode sheet, improving the structural stability inside the battery cell, and enhancing the long-term durability of the battery cell during transportation and multiple charge-discharge cycles. At the same time, it does not affect ion conduction in the composite coating layer, resulting in good battery consistency and optimal overall performance. In the embodiments of the present disclosure, when testing the particle size D50 of the bonding particles in the battery separator, the separator is sampled and tested under a scanning electron microscope (SEM). Within a randomly selected area of 100*100 µm of the separator, the particle sizes (diameters) of all bonding particles are calculated, and these particle sizes are sorted from smallest to largest. The median particle size is then taken as the D50 particle size of the bonding particles.

The particle size distribution of the bonding particles may satisfy D10 > (D50 - 1 µm) and D90 < (D50 + 1 µm). Controlling the particle size distribution of the bonding particles within the above range ensures that the proportion of ineffective adhesive particles with a particle size smaller than the ceramic substrate layer thickness x µm is less than 10%, and the proportion of large adhesive particles with a particle size greater than (D50 + 1 µm), which affect ion transport, is also less than 10%. At the same time, the distribution of the protrusion dimensions of the bonding particles relative to the ceramic substrate layer can generally be controlled within 0 to 2.5 µm. In contrast, with the PVDF spray coating adhesive solution used in conventional battery separators, the difference in the protrusion height of the adhesive particles is generally 0 to 20 µm. This means that the composite coating layer has high flatness, and the bonding particles can achieve good adhesion with the electrode sheet, not only improving the bonding force between the separator and the electrode sheet but also further optimizing the battery interface. In the embodiments of the present disclosure, D10 of the bonding particles refers to the particle size corresponding to a cumulative volume percentage of 10%, and D90 refers to the particle size corresponding to a cumulative volume percentage of 90%. When testing the particle sizes D10 and D90 of the bonding particles in the battery separator, the separator is sampled and tested under a scanning electron microscope (SEM). Within a randomly selected area of 100*100 µm of the separator, the particle sizes (diameters) of all bonding particles are calculated, and these particle sizes are sorted from smallest to largest. D10 is the particle size at the 10th percentile, and D90 is the particle size at the 90th percentile.

In some embodiments of the present disclosure, the relative deviation of the plurality of bonding particles exposed from the ceramic substrate layer is less than or equal to 2.5 µm. Specifically, within an area of 2500 µm², the maximum dimension of the bonding particles exposed from the ceramic substrate layer is b = 2.5 µm, and the minimum dimension is a = 0 µm, with b - a ≤ 2.5 µm. This can optimize and improve the flatness of the composite coating layer, allowing each bonding particle to achieve good adhesion with the electrode sheet, thereby further enhancing the structural stability of the battery cell.

In some embodiments of the present disclosure, x is in the range of 0.5 to 4. That is, the thickness of the ceramic substrate layer is in the range of 0.5 µm to 4 µm. For example, the thickness of the ceramic substrate layer can be 0.5 µm, 0.8 µm, 1 µm, 1.2 µm, 1.5 µm, 1.8 µm, 2.0 µm, 2.2 µm, 2.5 µm, 2.8 µm, 3.0 µm, 3.2 µm, 3.5 µm, 3.8 µm, 4.0 µm, 4.2 µm, 4.5 µm, 4.8 µm, etc. Controlling the thickness of the ceramic substrate layer within the above range can improve the thermal stability and mechanical properties of the separator, while also ensuring good ionic conductivity and high thinness of the separator.

In some embodiments of the present disclosure, the areal density of the plurality of bonding particles in the composite coating layer is in the range of 0.125 g/m² to 0.625 g/m² (corresponding to a coverage area of approximately 5% to 25%). For example, the areal density of the bonding particles in the composite coating layer can be 0.125 g/m², 0.175 g/m², 0.225 g/m², 0.275 g/m², 0.325 g/m², 0.375 g/m², 0.425 g/m², 0.475 g/m², 0.525 g/m², 0.575 g/m², 0.625 g/m², etc. In some specific embodiments of the present disclosure, the areal density of the plurality of bonding particles in the composite coating layer is in the range of 0.25 g/m² to 0.4 g/m². For example, the areal density of the bonding particles in the composite coating layer can be 0.25 g/m², 0.3 g/m², 0.35 g/m², 0.4 g/m², etc. Controlling the coating amount of the bonding particles within the above range ensures there are sufficient bonding particles to adhere to the electrode sheet, while also considering the active ion transport of the separator, keeping battery impedance at a relatively low level, which is beneficial for the full utilisation of battery performance. Furthermore, controlling the total content of the bonding particles within the above range allows for good adhesion performance while better controlling costs. Considering the recommended particle size range of the bonding particles, controlling the content of the bonding particles within the above range means controlling the number of bonding particles in the composite coating layer within a suitable range, ensuring that the bonding particles are uniformly dispersed in the composite coating layer with an appropriate density, balancing the structural stability of the battery cell and the rate capability of the battery. In the embodiments of the present disclosure, the method for testing the areal density of the bonding particles includes: taking a separator of unit area, weighing it to obtain its mass m1 (in g), then using a reagent to wash off the coating (composite coating layer) from the substrate to obtain the mass m2 of the substrate. The mass of the composite coating layer per unit area is m3 = m1 - m2 (in g). The washed-off composite coating layer (containing ceramic and bonding particles) is subjected to high-speed centrifugation separation, and the total mass m4 (in g) of the ceramic particles is weighed. The areal density of the bonding particles is (m3 - m4) / unit area, in g/m².

In some embodiments of the present disclosure, the material of the bonding particles includes an amorphous polymer and/or a crystalline polymer. In some specific embodiments, the glass transition temperature (Tg) of the amorphous polymer is in the range of 70°C to 100°C. For example, the Tg of the amorphous polymer can be 70°C, 75°C, 80°C, 85°C, 90°C, 95°C, 100°C, etc. In some specific embodiments, the melting point (Tm) of the crystalline polymer is in the range of 110°C to 125°C. For example, the Tm of the crystalline polymer can be 110°C, 115°C, 120°C, 125°C, etc. Controlling the Tg or Tm of the bonding particle material within the above ranges ensures that the bonding particles are solid at room temperature, avoiding the need to deliberately control the temperature during preparation of the composite coating layer slurry, reducing production costs, and facilitating production of a composite coating layer slurry with suitable viscosity. At the same time, the Tg or Tm of the bonding particles is compatible with the temperature of the hot-pressing process used in battery cell assembly. During the hot-pressing process for shaping the electrode sheet and the separator, the electrode sheet and the separator come into further contact, and the bonding particles soften to fully perform their adhesive function without undergoing significant deformation (e.g., melting) that could cause deformation or clogging of the substrate. Specifically, the above-mentioned hot-pressing process includes: after stacking or winding the negative electrode sheet, separator, and positive electrode sheet during battery cell manufacturing, placing them in a hot-pressing device, heating them to a certain temperature (generally 75 to 100°C) and maintaining for a certain duration to increase the compactness inside the battery cell.

In the embodiments of the present disclosure, when the material of the bonding particles includes an amorphous polymer and a crystalline polymer, one or both of the following two situations may occur: (1) the same composite coating layer includes bonding particles made of an amorphous polymer and bonding particles made of a crystalline polymer; (2) the material of the same bonding particle is a mixture of an amorphous polymer and a crystalline polymer.

In some specific embodiments of the present disclosure, the material of the bonding particles includes a crystalline polymer and an amorphous polymer. The glass transition temperature (Tg) of the amorphous polymer bonding particles is in the range of 70°C to 100°C, and the Tm of the crystalline polymer is in the range of 110°C to 125°C. For example, the glass transition temperature of the amorphous polymer can be 70°C, 75°C, 80°C, 85°C, 86°C, 87°C, 88°C, 89°C, 90°C, 91°C, 92°C, 93°C, 94°C, 95°C, 98°C, 100°C, etc. For example, the Tm of the bonding particle material can be 110°C, 115°C, 120°C, 125°C, etc. In this case, controlling the Tg of the amorphous polymer or the Tm of the crystalline polymer within the above ranges allows the bonding particles to maintain their original shape substantially during prolonged baking of the battery cell (e.g., baking at 90°C for more than 10 hours), reducing the risk of the bonding particles melting and clogging the pores of the substrate, which is more beneficial for battery cell manufacturing.

In some embodiments of the present disclosure, the crystalline polymer (i.e., the material of the crystalline bonding particles) includes polyethylene (PE), modified polypropylene (PP), and low-melting-point polyethylene terephthalate (PET). In some embodiments of the present disclosure, the amorphous polymer includes, but is not limited to, at least one of modified polyvinyl chloride (PVC), polystyrene (PS), polyacrylonitrile, polyacrylate (PMMA), styrene-acrylonitrile copolymer (ANS), styrene-acrylate copolymer, acrylonitrile-acrylate copolymer, and styrene-acrylonitrile-acrylate copolymer. The crystalline polymer includes, but is not limited to, at least one of polyethylene, polypropylene, and low-melting-point polyethylene terephthalate (PET). Among them, the polyacrylate-based polymer includes a copolymer of at least one of propyl methacrylate, ethylene glycol methacrylate, and diacetone acrylamide with methyl methacrylate. The thermal stability (glass transition temperature or melting point) and swelling characteristics of the above materials are suitable. The bonding particles made of the above materials have a low swelling rate in the electrolyte and can maintain high cohesion even during long-term storage and cycling of the battery. Therefore, their adhesion ability is relatively stable. The risk of the bonding particles swelling and clogging the pores of the separator substrate is also greatly reduced, allowing lithium ions to continue to flow smoothly, keeping the battery's internal resistance low, and ensuring good consistency of the direct current internal resistance (DCIR) across different parts of the battery, allowing the battery performance to be fully utilised. Furthermore, the cost of the above materials is low, which can further reduce the cost of the separator. Notably, the present disclosure adds crosslinking monomers (at least one of propyl methacrylate, ethylene glycol methacrylate, and diacetone acrylamide) to PMMA, which increases the degree of crosslinking of the PMMA polymer and increases its molecular weight, thereby enhancing the interaction between PMMA molecular chain segments and reducing swelling.

Furthermore, compared with the commonly used binder PVDF in related technologies, the above-mentioned amorphous polymers and crystalline polymers are fluorine-free, more environmentally friendly, and have lower costs, thus being more advantageous for the production and application of battery separators.

In the present disclosure, the substrate in the separator can be any material known in the art. In some specific embodiments, the substrate can be a polyolefin material, including but not limited to a polyethylene microporous substrate or a polypropylene microporous substrate. The porosity of the substrate can be selected by those skilled in the art according to production needs, for example, in the range of 25% to 80%, and the present disclosure does not impose specific limitations on this.

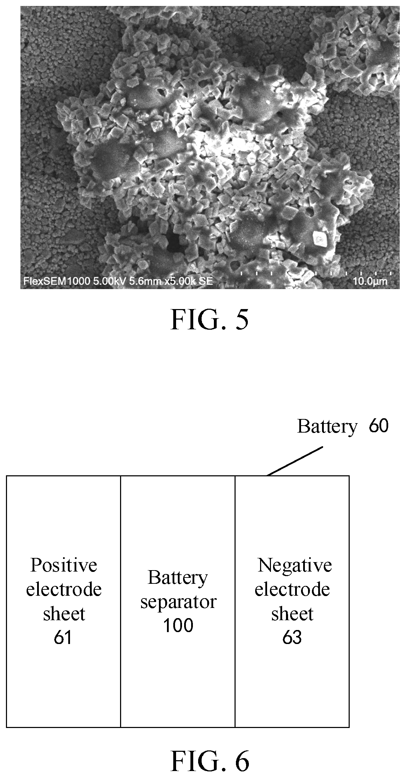

An embodiment of the present disclosure also provides a battery. As shown in FIG. 6, a battery 60 includes a positive electrode sheet 61, a negative electrode sheet 63, and the battery separator 100 according to the embodiments of the present disclosure. The separator is disposed between the positive electrode sheet and the negative electrode sheet.

The separator has good thermal stability and mechanical stability, and good adhesion to the positive and negative electrode sheet. Therefore, the separator is not prone to misalignment during battery storage and cycling. It can also provide good gas venting channels for gases generated during battery formation, improving issues such as delamination between the separator and the electrode sheet. The battery has good internal structural stability, which is beneficial for long-term stable performance of the battery.

In the present disclosure, the battery may be a liquid-state battery using an electrolyte. The electrolyte used may be any electrolyte known in the art.

In the present disclosure, the positive electrode sheet may be any positive electrode sheet known in the art; the negative electrode sheet may be any negative electrode sheet known in the art.

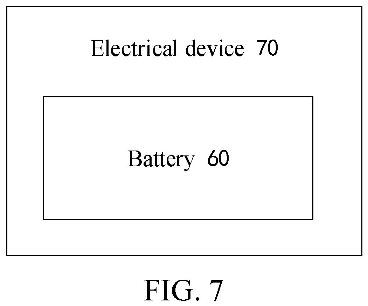

An embodiment of the present disclosure also provides an electrical device 70. As shown in FIG. 7, the electrical device 70 includes the battery 60 provided by the embodiment of the present disclosure. By using the battery provided by the embodiment of the present disclosure for power supply, the electrical device has stable power supply and high market competitiveness.

In some embodiments of the present disclosure, the electrical device includes, but is not limited to, 3C electronic devices, new energy vehicles, electric bicycles, etc.

The technical solutions of the present disclosure are further described below through several examples.

### Example 1

A composite coating layer slurry (specifically comprising boehmite particles with a D50 particle size of 0.7 µm and polyethylene bonding particles) is applied by roll coating on both opposite surfaces of a microporous polypropylene substrate with a thickness of 12 µm and a porosity of 40%, followed by drying at 85°C and slitting to obtain a separator. The separator includes a substrate and a composite coating layer disposed on one surface of the substrate. The composite coating layer includes a ceramic substrate layer with a thickness of 2.0 µm, in which bonding particles with a particle size D50 of 2.4 µm are dispersed. The melting point (Tm) of the bonding particles is 120°C. The coating amount of the binder particles in the composite coating layer is 0.325 g/m².

### Example 2

The difference from Example 1 is that the composite coating layer includes a ceramic substrate layer with a thickness of 2.0 µm, in which bonding particles with a particle size D50 of 2.7 µm are dispersed.

### Example 3

The difference from Example 1 is that the composite coating layer includes a ceramic substrate layer with a thickness of 2.0 µm, in which bonding particles with a particle size D50 of 3.3 µm are dispersed.

### Example 4

The difference from Example 1 is that the composite coating layer includes a ceramic substrate layer with a thickness of 2.0 µm, in which bonding particles with a particle size D50 of 3.7 µm are dispersed.

### Example 5

The difference from Example 1 is that the composite coating layer includes a ceramic substrate layer with a thickness of 2.0 µm, in which bonding particles with a particle size D50 of 4.0 µm are dispersed.

### Example 6

The difference from Example 1 is that the composite coating layer includes a ceramic substrate layer with a thickness of 2.0 µm, in which bonding particles with a particle size D50 of 4.3 µm are dispersed.

### Example 7

The difference from Example 1 is that the ceramic substrate layer has bonding particles with a particle size D50 of 3.3 µm dispersed therein; the areal density of the bonding particles in the composite coating layer is 0.1 g/m².

### Example 8

The difference from Example 1 is that the ceramic substrate layer has bonding particles with a particle size D50 of 3.3 µm dispersed therein; the areal density of the bonding particles in the composite coating layer is 0.125 g/m².

### Example 9

The difference from Example 1 is that the ceramic substrate layer has bonding particles with a particle size D50 of 3.3 µm dispersed therein; the areal density of the bonding particles in the composite coating layer is 0.28 g/m².

### Example 10

The difference from Example 1 is that the ceramic substrate layer has bonding particles with a particle size D50 of 3.3 µm dispersed therein; the areal density of the bonding particles in the composite coating layer is 0.48 g/m².

### Example 11

The difference from Example 1 is that the ceramic substrate layer has bonding particles with a particle size D50 of 3.3 µm dispersed therein; the areal density of the bonding particles in the composite coating layer is 0.625 g/m².

### Example 12

The difference from Example 1 is that the ceramic substrate layer has bonding particles with a particle size D50 of 3.3 µm (i.e., x+1.3 µm) dispersed therein; the bonding particles are made of a polyacrylate polymer (PMMA); the Tg of the bonding particles is 90°C.

### Example 13

The difference from Example 1 is that the thickness of the ceramic substrate layer in the separator is 3 µm, and the bonding particles dispersed in the ceramic substrate layer have a particle size D50 of 4.3 µm; the bonding particles are made of a polyacrylate polymer (PMMA); the Tg of the bonding particles is 90°C.

### Example 14

The difference from Example 1 is that the thickness of the ceramic substrate layer in the separator is 0.5 µm, the boehmite particles in the ceramic substrate layer have a particle size D50 of 0.4 µm, and the bonding particles dispersed in the ceramic substrate layer have a particle size D50 of 1 µm; the bonding particles are made of a modified polyethylene polymer (PE); the Tm of the bonding particles is 120°C.

To highlight the beneficial effects of the embodiments of the present disclosure, the following comparative example is set up.

### Comparative Example 1

A battery separator comprising a microporous polypropylene substrate with a thickness of 12 µm and a porosity of 40%, on both opposite surfaces of which a ceramic particle layer and an organic adhesive layer are sequentially laminated. The thickness of the ceramic particle layer is 2.0 µm, and the ceramic layer comprises boehmite particles with a D50 particle size of 0.7 µm, applied by roll coating. The average thickness of the organic adhesive layer is 3 µm, and the material of the organic adhesive layer is polyvinylidene fluoride (PVDF), with an areal density of 0.25 g/m², applied by water-based spraying.

### Performance Testing

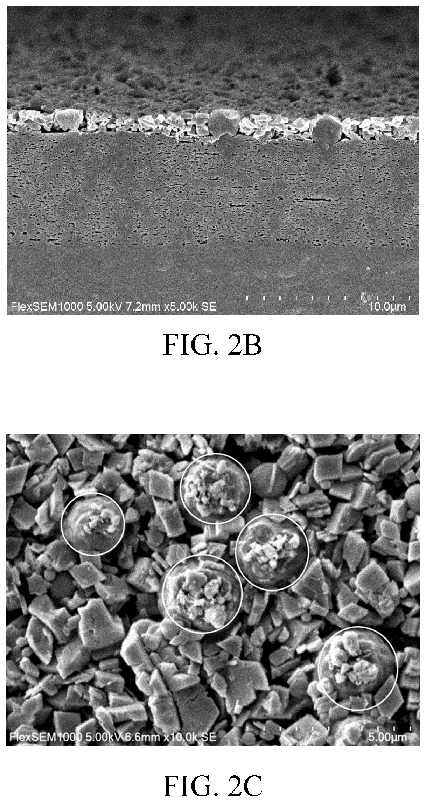

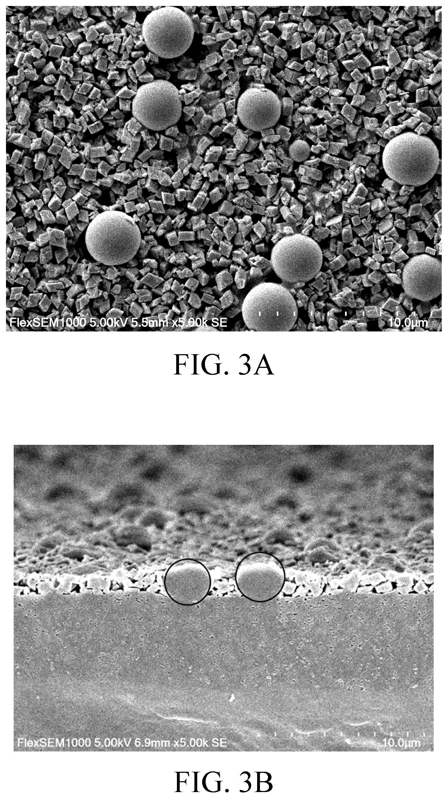

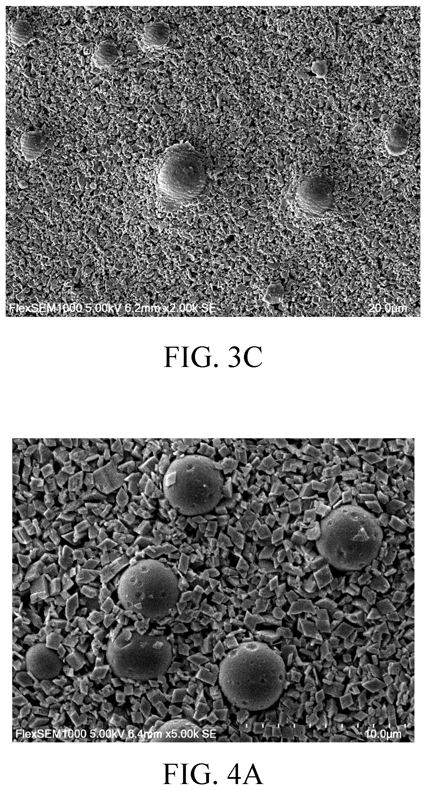

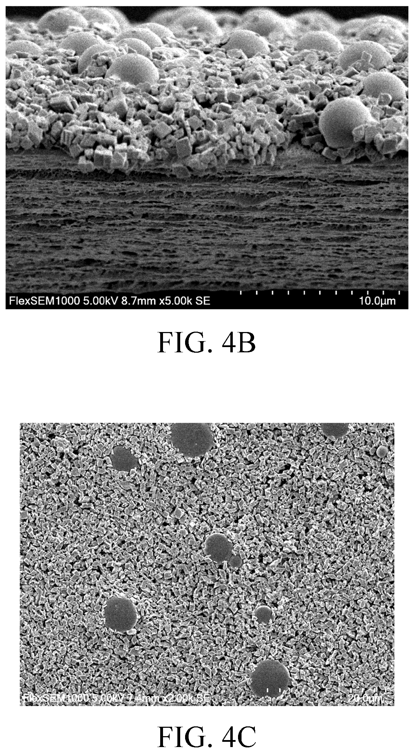

(1) Morphology Test: the morphology of the battery separators of each example is observed using a scanning electron microscope (SEM). SEM photographs of the battery separators of some examples are summarized in FIG. 2A to FIG. 5. It can be seen that after hot-pressing, the morphology of the bonding particles and the interfacial morphology of the separator itself does not change significantly in the battery separators provided by the embodiments of the present disclosure. It will be noted that during the SEM sample preparation process, to expose the cross-section of the battery separator, ion cutting is used. Under high-energy ion bombardment, the exposed portions of the bonding particles at the cross-section show signs of wear (FIG. 2B and FIG. 3B). In FIG. 2C, the bonding particles are marked with white circles. FIG. 5 is an SEM photograph of the surface of a battery electrode sheet disassembled from the battery of Example 4 after room temperature cycle testing. This is because the bonding particles adhere securely to the electrode sheet, and upon disassembly of the electrode assembly after cycling, the bonding particles remain stuck to the surface of the electrode sheet, fully demonstrating that the battery separator provided by the embodiments of the present disclosure can stably adhere to the electrode sheet.
(2) Adhesion Strength Test: the battery separator of each example is laminated with an electrode sheet and hot-pressed under conditions of a temperature of 95°C, a pressure of 2 MPa, and a time of 60 seconds. Then, the peel strength between the separator and the electrode sheet is tested to obtain the adhesion strength between the coating and the electrode sheet.

### (3) Battery Performance Testing

① Preparation of test batteries containing the battery separators of the examples and comparative example: a positive electrode sheet and a negative electrode sheet are prepared. The positive electrode sheet comprises a positive electrode current collector (specifically, aluminum foil) and a positive electrode active material layer. The positive electrode active material layer comprises a positive electrode active material (specifically, lithium iron phosphate, LiFePO₄), a conductive agent (specifically, Super P), and a binder (specifically, polyvinylidene fluoride, PVDF) in a mass ratio of 95:2.6:2.4. The negative electrode sheet comprises a negative electrode current collector (specifically, copper foil) and a negative electrode active material layer comprising a negative electrode active material (specifically, graphite), a conductive agent (specifically, Super P), and a binder (specifically, CMC+SBR=1+1.6) in a mass ratio of 96.00:1.40:2.60.
   The separators of each example and comparative example are respectively placed between a positive electrode sheet and a negative electrode sheet to separate them. 7 layers of positive electrode, 8 layers of negative electrode, and 16 layers of separator are stacked to obtain dry electrode assemblies. The dry electrode assemblies are hot-pressed at 95°C and 2 MPa for 60 seconds. Each dry electrode assembly is placed in an aluminum-plastic film outer packaging, vacuum-dried at 95°C for 12 hours to remove moisture, cooled, injected with electrolyte, vacuum-sealed, allowed to stand and infiltrate at 50°C for 48 hours, then subjected to pressurized formation at 25°C, high-temperature aging at 45°C, secondary sealing, degassing, and capacity grading to obtain batteries S1-S14 of the examples and battery DS1 of the comparative example.
② Battery Discharge Impedance (DCIR) Test: the battery is at 50% state of charge (SOC) and discharged at a current density of 1.5C for 30 seconds at a temperature of 25° C.
③ Room Temperature Cycle Test: under conditions of 25±1°C, the battery is subjected to charge-discharge cycle testing with a 1.0C charge and 1.0C discharge. The procedure is as follows: rest for 10 minutes; constant current charge at 1.0C to 3.8V, constant voltage charge until the current drops to 0.05C; rest for 10 minutes; constant current discharge at 1.0C to 2.0V, which constitutes 1 cycle. This procedure is repeated, and the capacity retention rate of the battery after 1000 cycles is tested. The test is continued, and the number of cycles when the battery capacity retention rate reaches 85% is recorded as the cycle life of the battery. The results are summarized in Table 1. For each group, 5 batteries are tested, and the average values are taken.

**Table 1**

| Case | Adhesion Strength at 95°C (N/m) | Discharge DCIR (mΩ) | Capacity Retention Rate after 1000 Cycles | Cycle Life (Number of Cycles) |
|---|---|---|---|---|
| S1 | 1.12 | 84.2 | 92.3% | 2980 |
| S2 | 1.43 | 82.5 | 92.7% | 3170 |
| S3 | 1.85 | 81.0 | 93.8% | 3860 |
| S4 | 1.61 | 79.8 | 93.1% | 3410 |
| S5 | 1.36 | 79.1 | 92.8% | 3230 |
| S6 | 0.84 | 78.5 | 90.3% | 2100 |
| S7 | 0.62 | 77.5 | 89.5% | 1930 |
| S8 | 0.88 | 78.1 | 91.5% | 2590 |
| S9 | 1.35 | 79.2 | 93.2% | 3470 |
| S10 | 2.65 | 83.5 | 92.5% | 3100 |
| S11 | 3.45 | 87.3 | 90.5% | 2180 |
| S12 | 1.98 | 81.7 | 93.0% | 3490 |
| S13 | 1.77 | 82.1 | 93.1% | 3510 |
| S14 | 1.50 | 82.0 | 92.8% | 3200 |
| DS1 | 0.45 | 78.1 | 89.8% | 1910 |

The data in Table 1 shows that the battery separators provided by the embodiments of the present disclosure exhibit good adhesion to the electrode sheet, maintaining the structural stability of the battery cell during battery manufacturing and cycling. Furthermore, compared with the commonly used PVDF organic adhesive layer in related technologies, the adhesion ability of the battery separators provided by the embodiments of the present disclosure is not inferior. Moreover, when the adhesion strength between the separator and the electrode sheet is comparable for the example separators and the comparative example separator, their electrochemical performance is also comparable. In other words, the battery separators provided by the embodiments of the present disclosure can achieve a level comparable to that of the prior art while significantly saving process steps and reducing production costs.

Further, comparing the data between Example 1 to Example 6, it can be found that adjusting the relationship between the D50 of the bonding particles and the thickness of the ceramic substrate layer within the range suggested by the present disclosure (Example 2 to Example 5) optimized the final electrochemical performance of the battery. Particularly, when controlling the relationship between the D50 of the bonding particles and the thickness of the ceramic substrate layer within the further suggested range of the present disclosure (Example 3), the battery's electrochemical performance is even better. Comparing Example 7 to Example 11, adjusting the areal density of the bonding particles within the further suggested range of the present disclosure (Example 9) allowed the adhesion strength between the separator and the electrode sheet to be controlled within a more suitable range, thereby improving the final electrochemical performance of the battery.

The above are exemplary embodiments of the present disclosure. It will be noted that for those skilled in the art, several improvements and modifications can be made without departing from the principles of the present disclosure, and these improvements and modifications are also considered to be within the scope of protection of the present disclosure.

## Claims

1. A battery separator (100), comprising:
a substrate layer (1), the substrate layer (1) comprising a substrate (10) and bonding particles (2), in a thickness direction of the separator, the bonding particles (2) being exposed from an outer surface of at least one side of the substrate (10).

2. The battery separator (100) according to claim 1, wherein the substrate layer (1) comprises:
a composite coating layer (20) being disposed on a surface of at least one side of the substrate (10) in a thickness direction, the composite coating layer (20) comprising a ceramic substrate layer (21) and a plurality of the bonding particles (2) being dispersed in the ceramic substrate layer (21), the bonding particles (2) being exposed from an outer surface of the ceramic substrate layer (21).

3. The battery separator (100) according to claim 2, wherein a particle size D50 of the bonding particles (2) is greater than or equal to a thickness of the ceramic substrate layer (21).

4. The battery separator (100) according to claim 3, wherein the thickness of the ceramic substrate layer (21) is x µm, and the particle size D50 of the bonding particles (2) is in a range of (x µm + 0.4 µm) to (x µm + 2.0 µm).

5. The battery separator (100) according to claim 4, wherein the particle size D50 of the bonding particles (2) is in a range of (x µm + 0.8 µm) to (x µm + 1.5 µm).

6. The battery separator (100) according to claim 4 or 5, wherein x is in a range of 0.5 to 4.

7. The battery separator (100) according to any one of claims 2 to 6, wherein the ceramic substrate layer (21) comprises ceramic particles; a particle size D50 of the ceramic particles is in a range of 0.1 µm to 1.5 µm.

8. The battery separator (100) according to any one of claims 1 to 7, wherein an areal density of the bonding particles (2) is 0.125 g/m² to 0.625 g/m².

9. The battery separator (100) according to claim 8, wherein the areal density of the bonding particles (2) is 0.25 g/m² to 0.4 g/m².

10. The battery separator (100) according to any one of claims 1 to 9, wherein the bonding particles (2) comprise an amorphous polymer and/or a crystalline polymer.

11. The battery separator (100) according to claim 10, wherein the bonding particles (2) comprise the amorphous polymer, and a glass transition temperature of the amorphous polymer is in a range of 70°C to 100°C.

12. The battery separator (100) according to claim 10 or 11, wherein the bonding particles comprise the crystalline polymer, and a melting point of the crystalline polymer is in a range of 110°C to 125°C.

13. The battery separator (100) according to any one of claims 10 to 12, wherein the bonding particles comprise the amorphous polymer, and the amorphous polymer comprises at least one of modified polyvinyl chloride, polystyrene, polyacrylonitrile, polyacrylate (PMMA), styrene-acrylonitrile copolymer, styrene-acrylate copolymer, acrylonitrile-acrylate copolymer, and styrene-acrylonitrile-acrylate copolymer.

14. The battery separator (100) according to any one of claims 10 to 13, wherein the bonding particles comprise the crystalline polymer, and the crystalline polymer comprises at least one of polyethylene, polypropylene, and polyethylene terephthalate.

15. A battery (60), comprising a positive electrode sheet (61), a negative electrode sheet (63), and the battery separator (100) according to any one of claims 1 to 14, the separator (100) being disposed between the positive electrode sheet (61) and the negative electrode sheet (63).

16. An electrical device (70), comprising the battery (60) according to claim 15.
